# EUROPEAN PATENT APPLICATION

(11) **EP 1 808 711 A2**
(43) Date of publication of application: **18.07.2007**
(21) Application number: 06027023.8
(22) Date of filing: 28.12.2006
(51) Int. Cl.: G01S 17/02, G01S 17/89, G01S 7/48

(54) **Object detector**

(30) Priority: 16.01.2006 JP 2006007394
(71) Applicant: OMRON CORPORATION, Kyoto-shi, Kyoto 600-8530 (JP)
(72) Inventor: Ando, Tanichi c/o Omron Corporation, 801,, Shimogyo-ku,Kyoto-shi Kyoto 600-8530 (JP); Fujioka c/o Omron Corporation, 801,, Shimogyo-ku,Kyoto-shi Kyoto 600-8530 (JP)
(74) Representative: Kilian, Helmut

(57) **Abstract**

An object detector detects an object with a camera and calculates position data showing its direction and distance. A laser radar obtains an front image and recognizes an identified image in the front image. Coordinates of this identified image are calculated and converted to data indicating direction to the object. The identified image is correlated with the object detected by the laser radar and the correlated object is identified as an identified object. Position data of this correlated object are outputted as data on the identified object.

## Description

### Background of the Invention

This invention relates to an object detector capable of accurately distinguishing among the types of objects that are present in front of an automobile.

In order to prevent traffic accidents involving automobiles, it is becoming a common practice in recent years to make use of optical distance measuring apparatus having a laser scanning device to use a near-infrared laser beam to scan the front and to detect the presence or absence of an object in front (such as a front going vehicle, an obstacle or a pedestrian) and to measure its distance by receiving its reflected light. Such distance measuring apparatus are being used for the cruising control for adjusting the speed of one's own vehicle according to the distance to the front going vehicle, as well as for the emergency stopping control for preventing contact with a pedestrian.

In order to effectively carry out such cruising control and emergency stopping control, however, it is important to be able to identify the kinds of objects in front. In view of this, Japanese Patent Publication Tokkai 7-270536, for example, disclosed an object identifying device for carrying out a grouping process by examining the continuity characteristic of a target object of detection and judging whether the target object is a roadside structure or a front going vehicle from the total number of target objects in each group and their relative distances. Japanese Patent Publication Tokkai 8-263784 disclosed, on the other hand, a device using a far-infrared camera to detect the heat from a person and to detect a target object as a pedestrian.

The device according to aforementioned Japanese Patent Publication Tokkai 7-270536 is capable of judging whether an object is a front going vehicle or a roadside structure but is not capable of determining whether or not it is a pedestrian (a person). In order to carry out an emergency stopping control, however, it is necessary to accurately determine whether a detected object is a person or not. If a person is detected but if it is determined not as a person, there is a danger of contacting it, resulting in a traffic accident. If a roadside structure or the like is detected but if it is erroneously identified as a person and the vehicle is suddenly stopped, it turns out to be a serious detriment to a smooth flow of traffic.

Although there exist technologies of using a camera to obtain an image of the front of an automobile and to identify an object within a specified area as a person if the shape of its image is nearly that of a person, the shape of a person does not always remain the same and it is not possible to accurately identity an object as a person. If a person is wearing a heavy overcoat or carrying a briefcase so as to significantly alter his/her overall silhouette, it may be impossible to judge the image as that of a person.

As for a device according to aforementioned Japanese Patent Publication Tokkai 8-263784, although the heat of a person is to be detected by means of a far-infrared camera, the shape of an image corresponding to a person may change significantly when a person is wearing a heavy down jacket or a person's face or hand has been exposed to a cold exterior condition for a long time.

### Summary of the Invention

It is therefore an object of this invention to provide an object detector capable of accurately distinguishing an object detected by a sensor as a person (or an animal) and detecting its position and distance.

An object detector according to this invention may be characterized as comprising an object sensor for detecting an object in front of an automobile, position data calculating means for calculating position data that show direction and distance of an object detected by the object sensor, an image sensor for obtaining a front image in front of the automobile and recognizing an identified image in the front image, coordinate calculating means for calculating coordinates of the identified image recognized by the image sensor in the front image, a correspondence processing part that converts the coordinates of the identified image calculated by the coordinate calculating means to thereby obtain data indicating direction to the object, correlates the identified image with the object detected by the object sensor and identifies the correlated object as an identified object, and data outputting means for outputting position data of the correlated object as data of the identified object.

According to this invention, an object sensor such as a laser radar is used to scan the front of an automobile and an image of the front of the automobile is obtained by an image sensor such as a camera. The direction and distance to an object are detected by the former and an identified image such as that of the face of a person is recognized by the latter. The direction of the object detected by the former and the coordinates of the face detected by image processing are compared and the object corresponding to the image coordinates is identified as an identified object (such as a person).

Explained more in detail, if the laser radar detects reflection with intensity over a specified value, it is judged that an object exists and the direction and distance to the object inside the range of scan are obtained, and the face of a person is detected from the image by the camera. The coordinates of the face detected by image recognition are replaced by the direction within the scan direction of the laser radar and the object corresponding to (or matching) the coordinates of this face is identified as a person. Data on the direction and distance to this person are then outputted. Thus, the object detected by the laser radar can be accurately distinguished whether it is a person or not, and the distance and direction to the person can be obtained.

The object sensor need not be a laser radar but may be an electromagnetic wave radar, an electrostatic capacity sensor or a stereoscopic image sensor.

In the above, the correspondence processing part is characterized as identifying those of objects detected continuously by the object sensor matching in direction and distance of displacement within a specified time as belonging to a same group and correlating a plurality of objects belonging to a same group as the object correlated to the identified object as a single object to the identified image. According to this invention, objects of which the directions and distances of displacement within the time of one scan (displacement vectors) match are identified as belonging to a single group. All objects belonging to the same group as object correlated to a specified image are judged to be a single object.

The object detector of this invention may further comprise object sensor control means for reducing the threshold value of the object sensor, when the object sensor has detected an object, to cause the object sensor to scan again a surrounding area of the detected object. When an object is detected by the object sensor of an object detector thus structured, the threshold value for judging the presence of an object is lowered and the surrounding area is scanned again such that the face of a person with lower reflectivity can be dependably detected.

In the above, the correspondence processing part may be characterized as judging, if a first object was detected at the time of the previous scan in an area which is the same as or next to the area in which a second object is detected at the time of a current scan, that the aforementioned first and second objects are the same object. According to this embodiment of the invention, if each of the areas where an object was detected in the current scan by the laser radar is such that an object was also detected in the previous scan in the same or adjacent area, these objects are judged to be the same object. If this object corresponds to the position of a face, therefore, this object is identified as a person and is traced along the time axis.

In the above, the correspondence processing part may be characterized as continuing to judge the second object to be the identified object if the first object was judged to correlate to the identified object and the first object and the second object were judged to be the same object, although the second object may not be correlated to the identified object. In other words, once an object is judged to be a person, it continues to be judged as a person even after the face becomes unrecognizable by the camera. Thus, even if the direction of the face is changed or the face becomes hidden by a scarf, for example, a person can be continually recognized as a person.

In the above, furthermore, the correspondence processing part may further be characterized as judging, if a group of objects which are of a plurality of objects detected by the object sensor and are detected in mutually adjacent areas is correlated to the identified image, that this group of objects correlates to the identified object. With the object detector thus structured, if a plurality of objects in areas adjacent to an object judged to be a person are judged to be a person, they are judged to be a group of objects including a person.

By an object detector of this invention, the position of an object detected by the object sensor and the image position of the face of a person obtained by the image sensor are compared and the object corresponding to the position of the image is identified as a person. Thus, it is possible to determine accurately whether the object detected by the sensor is a person (or an animal), independent of the outer shape of the person such as the clothing and to obtain the position and distance to the person.

### Brief Description of the Drawings

Figs. 1A and 1B are respectively a side view and a plan view of an automobile provided with an object detector embodying this invention.
Fig. 2A is a schematic structural diagram of the laser radar, Fig. 2B shows a scan control signal inputted to its electromagnetic coil and Fig. 2C shows a vertical scan control signal.
Fig. 3 is a block diagram showing the structure of an object detector.
Figs. 4A, 4B and 4C are drawings for showing the relationship between the ranges of scan and camera image.
Fig. 5 is a flowchart of the operations by the laser radar control part for detecting an area for the presence of a person.
Figs. 6A and 6B are drawings for explaining the process of second detection.
Fig. 7 shows a situation when no new object is detected by repeating the scan.
Fig. 8 is a flowchart of the operations by the spatial correspondence processing part.
Fig. 9 is a drawing for explaining the grouping process.

### Detailed Description of the Invention

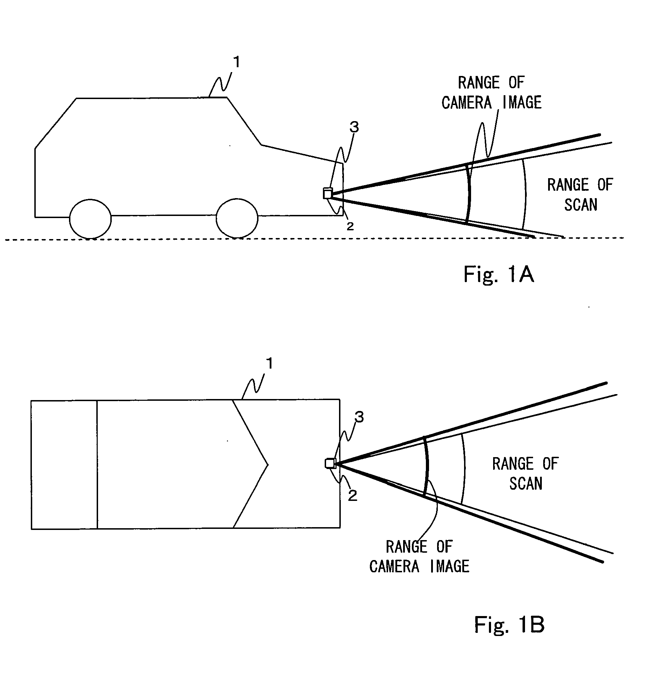

Figs. 1A and 1B show an automobile 1 provided with a detector embodying this invention comprising a laser radar 2 (as an image sensor) and a camera 3 (as an object sensor) set at its front part. The laser radar 2 is for projecting near-infrared laser light to the front of the automobile 1 and detecting objects by receiving reflected light with a photodiode or the like. The camera 3 is for obtaining images of the front of the automobile 1 continuously or intermittently. Specified images are to be identified in such images.

Fig. 1A is a side view of the automobile 1, and Fig. 1B is its plan view taken from above. The laser radar 2 is at the front end of the automobile 1 for projecting near-infrared laser light to the front of the automobile 1, the laser light being adjusted to scan horizontally over a specified angular range (such as by 20° to the left and to the right) and also vertically by a specified angle. The laser light may be arranged so as to change its vertical angle of irradiation at the end points of its horizontal scan. For example, it may be arranged so as to change its vertical angle after a horizontal scan and then to repeat its horizontal scan thereafter.

The laser light is projected radially as a beam expanding with an angular spread of about 1° ° because a parallel beam of laser light would harm people's eyes. The light is projected such that the width of the beam will widen with the increasing distance from the automobile such that near-infrared light with a high intensity would not reach people's eyes.

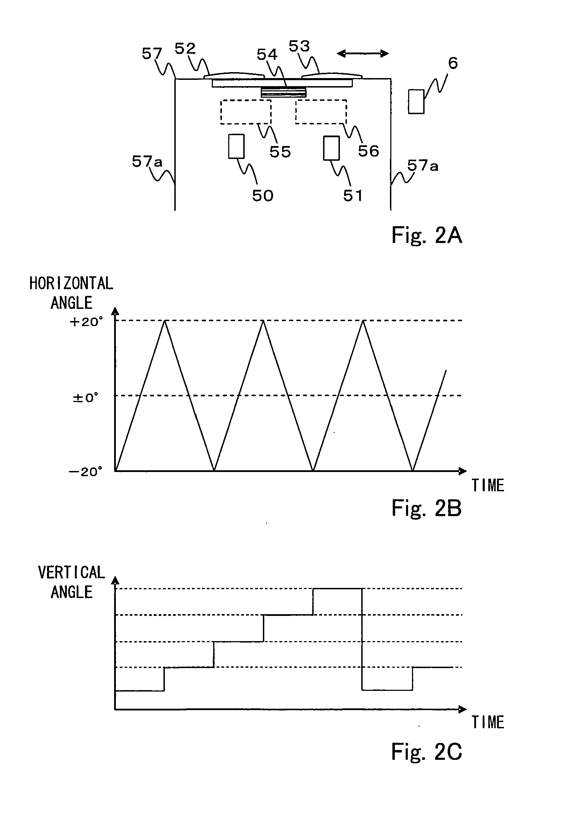

Figs. 2A, 2B and 2C are for explaining the laser radar 2 more in detail. As shown in Fig. 2A, laser light projected from a laser diode 50 is formed as a beam by means of a lens 52 and reflected light is detected by a photodiode 51 through another lens 53. The lenses 52 and 53 are affixed to a frame 57. The frame 57 is approximately U-shaped, both its side surfaces 57a being formed with a plate spring so as to oscillate together with the lenses 52 and 53 in the left-right direction. An electromagnetic coil 54 is provided at the center of the frame 57, flanked by permanent magnets 55 and 56. As a scan control signal shown in Fig. 2B is inputted to the electromagnetic coil 54, the frame 57 (together with the lenses 52 and 53) oscillates to the left and to the right by the attractive and repulsive forces between the magnetic field generated by this electromagnetic coil and the magnetostatic fields of the permanent magnets 55 and 56.

Figs. 2B and 2C show the scan control signals. The scan control signal in the horizontal direction as shown in Fig. 2B is inputted to the coil 54 such that the lenses 52 and 53 will undergo a horizontal oscillatory motion with amplitude of 40°. The scan control signal in the vertical direction is inputted as shown in Fig. 2C such that the angle of irradiation in the vertical direction will change at the end points of the horizontal scan. An electromagnetic actuator may be used for this purpose.

The vertical scan as described above, however, is not an essential element of the present invention. The scan may be carried out only one-dimensionally in the horizontal direction. In such a situation, the lens characteristics may be adjusted such that a vertically elongated laser beam will be projected to the front of the automobile to secure a sufficient vertical range of irradiation.

The laser radar 2 is adapted to measure the intensity of the laser light reflected in front of the automobile 1 by means of the photodiode 51. The measured intensity is outputted to a laser radar controller, to be described below. The laser radar controller serves to judge the existence of an object when there is a reflection with intensity greater than a specified level.

As shown in Figs. 1A and 1B, the camera 3 is set at a front portion of the automobile 1 and serves to take in images continuously or intermittently. The images thus taken in are outputted to an image processing part (to be described below), The field of vision of the camera is arranged to be wider than the range of the laser scan and in the same direction as that of the range of the laser scan.

The camera 3 is preferably a CMOS camera having a wide dynamic range so as to be able to simultaneously obtain good images of a very bright face surface in the sun and a dark object in a shade. In other words, the front of the automobile 1 is photographically a very adverse environment, becoming very bright in the daytime but very dark at night. Since a CMOS camera with a wide dynamic range has a wider dynamic range than human eyes, however, phenomena such as blackout and whitewash can be avoided even with target objects having a wide contrast in brightness.

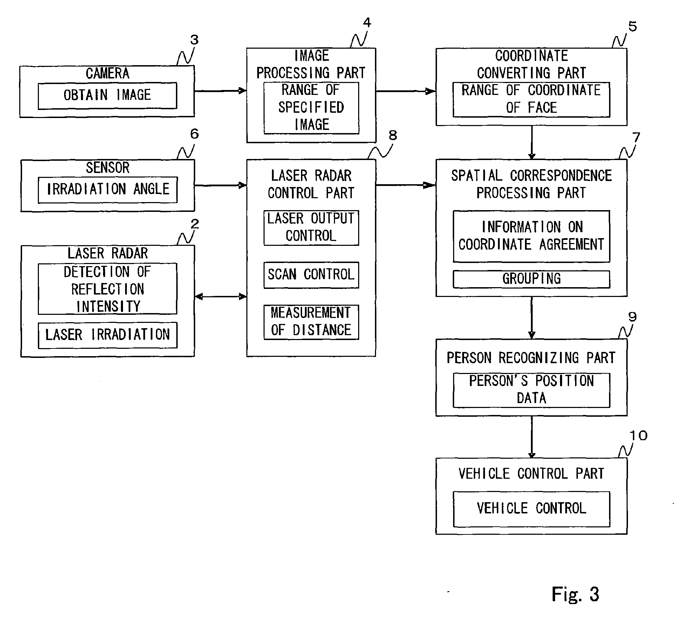

Fig. 3 is a block diagram showing the structure of an object detector, provided not only with a laser radar 2, a camera 3 and a sensor 6 but also with an image processing part 4 for receiving images taken by the camera 3 and recognizing specified images, a coordinate converting part 5 (or "coordinate calculating means") for converting the position of a specified image recognized by the image processing part 4 (coordinates within the image taking range) in the scan direction of the laser radar 2, a spatial correspondence processing part 7 (or simply "correspondence processing part") for inputting coordinate data of the specified image for which coordinates have been converted by the coordinate converting part 5 and the position (direction and distance) of the object detected by the laser radar 2, a laser radar control part 8 (or "position data calculating means") for controlling the direction and intensity of irradiation of the laser radar 2, a person recognizing part 9 (or "data outputting means") for calculating the position of a person from coordinate matching data inputted from the spatial correspondence processing part 7, and a vehicle control part 10 connected to the person recognizing part 9.

As explained above, the laser radar 2 serves to detect light reflected in front of the automobile 1 with the photodiode 51 and to measure the intensity of the reflected light. The reflection intensity is inputted to the laser radar control part 8 which concludes that there exists an object when this inputted reflection intensity becomes greater than a preset threshold value. The laser radar control part 8 is also capable of measuring the time delay between the laser irradiation timing and light reception timing and calculating the distance to the object from the measured time delay.

The sensor 6 serves to detect the irradiation angles of the laser light both in the horizontal and vertical directions (pan and tilt) within the range of the laser scan and inputs them in the laser radar control part 8. The laser radar control part 8 can determine the direction to the object from the irradiation angles of the laser light at the laser irradiation timing and the laser reception timing. In other words, when the reflection intensity exceeds the threshold value, the laser radar control part 8 references the angles of irradiation detected by the sensor 6 and determines this direction as the direction to the object.

Thus, the laser radar control part 8 can obtain data on the directions and distances to the surrounding objects from the intensities of laser reflection, the time delays and directions of irradiation. These data obtained by the laser radar control part 8 are inputted to the spatial correspondence processing part 7.

The image processing part 4 is formed with a digital signal processor and serves to recognize an identified image according to a specified recognition algorithm. As an embodiment of this invention, the face of a person is recognized as the identified image. For example, the image obtained by the camera 3 is partitioned into small areas and each image is matched with a preliminarily registered face pattern. Alternatively, a color image may be obtained and it may be examined whether it matches with a skin color. It may be arranged to recognize the eye of a person more in detail.

When a face has been recognized, the image processing part 4 inputs the data on the coordinate position of the face recognized within the field of vision of the camera 3 into the coordinate converting part 5 which serves to convert the coordinate position of the face recognized within the field of vision of the camera 3 into the coordinate position (scan direction) within the range of the laser scan. The coordinate data of the face converted by the coordinate converting part 5 are inputted to the spatial correspondence processing part 7.

The spatial correspondence processing part 7 compares the coordinate data of the face inputted from the coordinate converting part 5 with the direction of the object inputted from the laser radar control part 8. If the coordinates of the face agree with the direction to the object, the information on this agreement is communicated to the person recognizing part 9.

The person recognizing part 9 calculates the position data of the person from the information on the agreement inputted from the spatial correspondence processing part 7 and the direction and distance of the object obtained from the laser radar control part 8 through the spatial correspondence processing part 7. In other words, the direction and distance of the object that match the coordinates of the face are calculated as the direction and distance of the position where the person is.

The position data calculated by the person recognizing part 9 are inputted to the vehicle control part 10 which serves to control the speed of the own vehicle according to the position data of the person, executing a sudden stop, for example, in order to avoid a contact with the person. Instead of the above, position data of a front going vehicle may be inputted for carrying out a cruising control, adjusting the speed of the own vehicle to follow a front going vehicle.

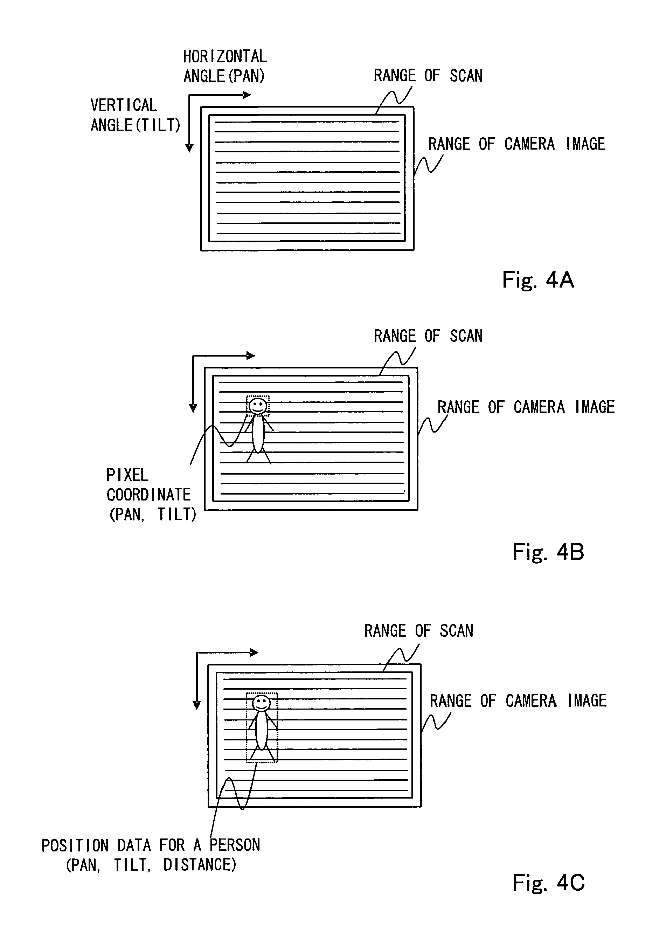

Next, the correspondence processing of the coordinates of a face and the direction of an object is explained more in detail. Figs. 4A, 4B and 4C show the range of scan by the laser radar 2 and the field of vision of the camera 3. As shown, the field of vision of the camera 3 is set so as to be larger than the range of scan by the laser radar 2. When a face is recognized inside the field of vision of the camera 3, the image processing part 4 detects the coordinates of the pixels of the face as shown in Fig. 4B and inputs them to the coordinate converting part 5. The coordinate converting part 5 converts the inputted coordinates of the pixels into the irradiation angles in the horizontal and vertical directions (pan and tilt) within the range of the laser scan. The conversion may be made by using a specified conversion formula which may be obtained by calibration at the time when the laser radar 2 and the camera 3 were mounted to the automobile 1.

The spatial correspondence processing part 7 compares the coordinate position of the face and the direction (pan and tilt) of the object detected by the laser radar control part 8. If they are found to match, the information on this agreement is transmitted to the person recognizing part 9.

When the information on coordinate agreement is inputted from the spatial correspondence processing part 7, the person recognizing part 9 obtains from the laser radar control part 8 the position data (irradiation angles and distance) for the presence of an object and recognizes them as the position data for the presence of a person. In this situation, the person recognizing part 9 recognizes not only the coordinate position of the face but also the whole of the person's area detected by the laser radar control part 8 (a plurality of target objects of detection considered to be a same object) as the position of the presence of the person. In other words, the position of the presence of a person as a whole (inclusive of objects in contact with the person such as his/her bicycle) is detected by detecting the position of the face. Since the position of the presence of the person as a whole is detected, the vehicle control part 10 can carry out an emergency stopping operation accurately.

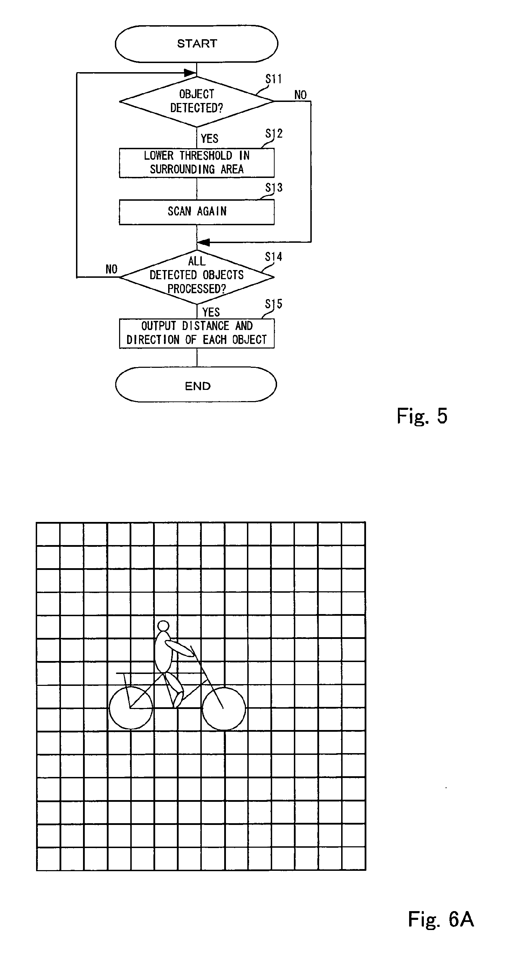

Next, Figs. 5-9 are referenced to explained the operations of the object detector. Fig. 5 is a flowchart of the operations for detecting an area for the presence of a person. First, it is determined whether an object has been detected or not (Step S11). If an object has been detected (YES in Step S11), the threshold value near this detected object is lowered (Step S12) and a scan is carried out again (Step S13). This is because the body of a person has generally a lower reflectivity and only surrounding objects with a higher reflectivity are detected if a normal threshold value is used. Thus, a second detection is carried out with a reduced threshold value if an object is once detected.

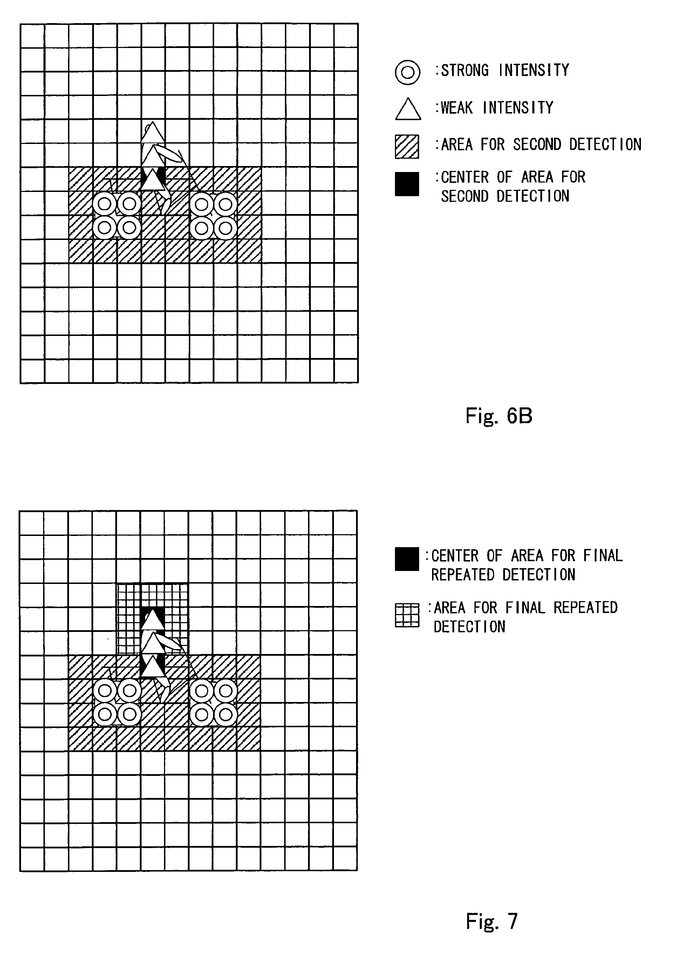

The process of second detection is explained next with reference to Figs. 6A and 6B for a situation where a person riding a bicycle is being detected. Thus, an image of a bicycle rider is shown within the range of scan by the laser radar, as shown in Fig. 6A wherein lattice lines indicate the resolution of the laser radar. Since the bicycle wheels are mostly metallic and intensity of reflected laser light therefrom is high, only the wheel portions of the image are detected as shown in Fig. 6B at the time of a scan with a high threshold value. In other scanned areas, objects are not detected if the threshold value is high although objects do exist in these areas, and it is because the intensity of reflected light therefrom is too low.

Thus, the laser radar control part 8 resets the threshold value lower in the areas surrounding the area where the intensity of received light was high and carries out another scan. By such a repeated scan with a lower-than-usual threshold value, objects that could not be detected by the previous scan may become detectable. In the example of Fig. 6B, the saddle portion which was not detected in the previous scan, is now detected.

If a new object is thus detected by a repeated scan with a reduced threshold value, still another scan is carried out around the area where the new object became detectable. If still another new object becomes detectable by the repeated scan, a scan is further repeated. This process is repeated until no new object becomes detectable by reducing the threshold value (NO in Step S14). Fig. 7 shows the final situation where the entire body of the person has been detected and no new object is detected any more by scanning the surrounding areas. The process of repeating the scan is then terminated and the data on the direction and distance of each object are outputted to the spatial correspondence processing part 7 (Step S15).

By thus repeating the scan, the body of a person with low intensity of received light can be dependably detected. Alternatively, the laser radar control part 8 may be adapted to determine whether a detected object is an mobile object (having a displacement vector) and to repeat the scan if the detected object is determined to be a mobile object. In this manner, the process can be simplified.

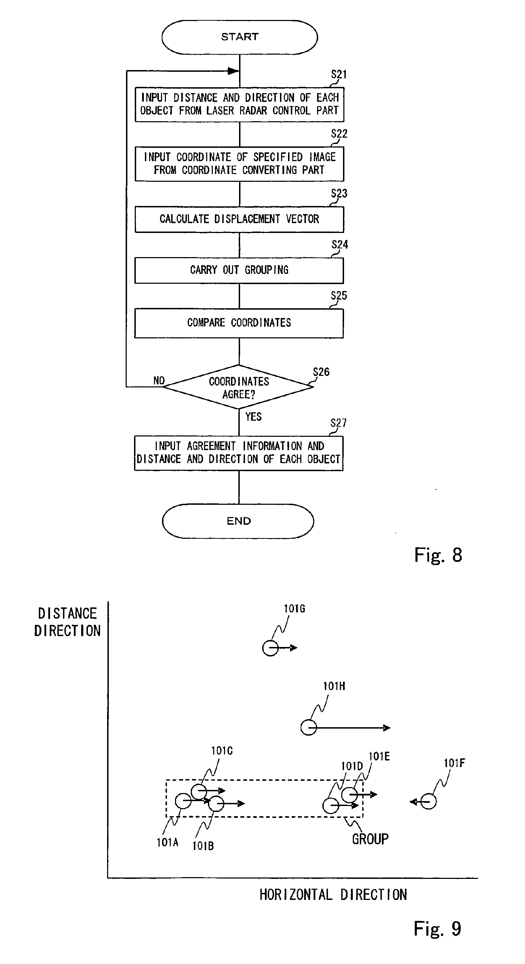

The operations by the spatial correspondence processing part 7 are explained next with reference to the flowchart shown in Fig. 8. As explained above, the spatial correspondence processing part 7 receives data on the direction and distance of each object from the laser radar control part 8 (Step S21) and the coordinates of a face from the coordinate converting part 5 (Step S22). The scanning by the laser radar 2 and the image-taking operations by the camera 3 are synchronized. The camera 3 may be adapted to take images, for example, at both end points of the scan by the laser.

Based on the data on the direction and distance of each object received from the laser radar control part 8, the spatial correspondence processing part 7 carries out grouping of the objects. This is because detection may be made with intensity of reflection greater than the threshold value if the laser radar control part 8 carries out a scan with a low threshold value, say, because of noise. Thus, the spatial correspondence processing part 7 calculates the displacement vector regarding each of detected objects (Step S23) and carries out the grouping process (S24) for eliminating noise.

The grouping process is explained next with reference to Fig. 9 wherein the horizontal axis represents the detection position of each object in the horizontal direction and the vertical axis represents the distance to each object. Although not shown, it is to be understood that the detection position of and the distance to each object are also compared in the vertical direction. Each of the circles in the figure indicates a detected object and each arrow indicates a displacement vector which represents the distance and the direction of displacement by each object during the time of one scan and is calculated from the position of its previous detection and that of its current detection. The time for one scan may, for example, be 100msec.

The spatial correspondence processing part 7 calculates the displacement vector of each object and compares them, and the objects of which the displacement vectors and distances are judged to be identical (or similar) are grouped together as belonging to the same object. In the example of Fig. 9, there are objects 101A-101H that have been detected and objects 101A-101E have distances and displacement vectors which are approximately the same. Accordingly, the spatial correspondence processing part 7 group objects 101A-101E together as representing one and the same object. It is noted that object 101F is approximately at the same distance as objects 101A-101E but since its displacement vector is different, pointing in the opposite direction, it is judged to be a different object. Similarly, although object 101G has a displacement vector which is about the same as those of objects 101A-101E, it is not considered to represent the same object since its distance is different. Object 101H is different from objects 101A-101E regarding both the distance and the displacement vector and hence is considered to represent a different object.

Regarding each object after the grouping process as described above, the spatial correspondence processing part 7 identifies objects from the images obtained by the camera 3. Received data on the directions of the objects and the coordinates of the face are compared (Step S25) and if they do not agree (NO in Step S26), the program returns to its beginning. If there is an agreement (YES in Step S26), the information regarding this agreement and the position data (direction and distance) of this object (in units of groups if grouping has been carried out) are inputted to the person recognizing part 9 (Step S27).

As the information regarding the agreement and the position data of the object are inputted, the person recognizing part 9 distinguishes this object as a person. If this object is a result of a grouping process as described above, this group as a whole is recognized as a person. In other words, all objects that are near the face which has been recognized and have about the same distances and displacement vectors are together judged as representing a person. An area larger than the inputted position data of objects is recognized as the position of the person. This has the effect of providing a spatial margin to the detection accuracy of the laser radar and the level of safety can be improved.

Once an object is recognized as a person, the person recognizing part 9 continues to recognize this object as a person even after the image processing part 4 becomes unable to recognize the face and the spatial correspondence processing part 7 ceases to recognize agreement of the coordinates. In other words, if a face is recognized even once, the object at the corresponding position continues to be recognized as a person. Thus, even if the direction of the face of the person changes or the face becomes hidden behind a scarf, for example, it is still possible to keep recognizing a person as a person.

After a face has been recognized, the image processing part 4 may be adapted to continue recognizing the image of the position where the face was recognized (such as the back of the head) even after it becomes impossible to recognize the face itself, say, because the person has turned around to face backward) and to judge it as a person. The image processing part 4 may be further adapted to analyze characteristic quantities of the face (such as the distribution of the eyes, the nose and the mouth) more in detail and to record them in an internal memory (not shown) such that a pattern match process can be carried out regarding such characteristic quantities when it becomes impossible to recognize the face and it can be ascertained whether it is the same person or not.

Since the laser radar control part 8 recognizes all objects moving continuously within the range of scan with the same displacement vector as a single object and outputs the position data of this object, the position of a person can be recognized accurately and continuously as the spatial correspondence processing part 7 considers correspondence with the position coordinates of the face recognized by the image processing part 4.

When many people are walking together in a close group, for example, many faces will be detected over a wide area within the range of camera image. In such a situation, a crowd is judged to exist in an area near the detected faces, and the person recognizing part 9 recognizes the objects detected by the laser radar control part 8 as an assembly of people. When an assembly has been recognized, it may be arranged to determine by a pattern matching process whether the same person with the already recognized face exists or not. As a result, the number of persons who are not the same as the already recognized person can be counted, and hence the minimum number of persons in the assembly can be recognized.

Although the use of a laser radar was described above for detecting the existing of an object, this is not intended to limit the scope of the invention. Instead, the existence of an object may be detected by means of a radar using electromagnetic waves, an electrostatic capacitance type sensor or a stereoscopic image sensor. Although the invention was described above as applied to an automobile, it now goes without saying that the invention can be applied to other kinds of vehicles such as railroad cars and boats. It also goes without saying the target object of detection need not be human, but may be any preliminarily defined object.

## Claims

1. An object detector comprising:
an object sensor for detecting an object in front of an automobile;
position data calculating means for calculating position data that show direction and distance of an object detected by said object sensor;
an image sensor for obtaining a front image in front of said automobile and recognizing an identified image in said front image;
coordinate calculating means for calculating coordinates of said identified image recognized by said image sensor in said front image;
a correspondence processing part that converts the coordinates of said identified image calculated by said coordinate calculating means to thereby obtain data indicating direction to said object and to correlate said identified image with the object detected by said object sensor and identifies said correlated object as an identified object; and
data outputting means for outputting position data of said correlated object as data of the identified object.

2. The object detector of claim 1 wherein said correspondence processing part identifies those of objects detected continuously by said object sensor matching in direction and distance of displacement within a specified time as belonging to a same group and correlates a plurality of objects belonging to a same group as the object correlated to said identified object as a single object to said identified image.

3. The object detector of claim 2 further comprising object sensor control means for reducing the threshold value of said object sensor, when said object sensor has detected an object, to cause said object sensor to scan again a surrounding area of said detected object.

4. The object detector of claim 1 wherein said correspondence processing part judges, if a first object was detected at the time of the previous scan in an area which is the same as or next to the area in which a second object is detected at the time of a current scan, that said first object and said second object are the same object.

5. The object detector of claim 2 wherein said correspondence processing part judges, if a first object was detected at the time of the previous scan in an area which is the same as or next to the area in which a second object is detected at the time of a current scan, that said first object and said second object are the same object.

6. The object detector of claim 3 wherein said correspondence processing part judges, if a first object was detected at the time of the previous scan in an area which is the same as or next to the area in which a second object is detected at the time of a current scan, that said first object and said second object are the same object.

7. The object detector of claim 4 wherein said correspondence processing part continues to judge said second object to be said identified object if said first object was judged to correlate to said identified object and said first object and said second object were judged to be the same object, although said second object may not be correlated to said identified object.

8. The object detector of claim 5 wherein said correspondence processing part continues to judge said second object to be said identified object if said first object was judged to correlate to said identified object and said first object and said second object were judged to be the same object, although said second object may not be correlated to said identified object.

9. The object detector of claim 6 wherein said correspondence processing part continues to judge said second object to be said identified object if said first object was judged to correlate to said identified object and said first object and said second object were judged to be the same object, although said second object may not be correlated to said identified object.

10. The object detector of claim 1 wherein said correspondence processing part judges, if a group of objects which are of a plurality of objects detected by said object sensor and are detected in mutually adjacent areas is correlated to said identified image, that said group of objects correlates to said identified object.

11. The object detector of claim 2 wherein said correspondence processing part judges, if a group of objects which are of a plurality of objects detected by said object sensor and are detected in mutually adjacent areas is correlated to said identified image, that said group of objects correlates to said identified object.

12. The object detector of claim 3 wherein said correspondence processing part judges, if a group of objects which are of a plurality of objects detected by said object sensor and are detected in mutually adjacent areas is correlated to said identified image, that said group of objects correlates to said identified object.

13. The object detector of claim 4 wherein said correspondence processing part judges, if a group of objects which are of a plurality of objects detected by said object sensor and are detected in mutually adjacent areas is correlated to said identified image, that said group of objects correlates to said identified object.

14. The object detector of claim 5 wherein said correspondence processing part judges, if a group of objects which are of a plurality of objects detected by said object sensor and are detected in mutually adjacent areas is correlated to said identified image, that said group of objects correlates to said identified object.

15. The object detector of claim 6 wherein said correspondence processing part judges, if a group of objects which are of a plurality of objects detected by said object sensor and are detected in mutually adjacent areas is correlated to said identified image, that said group of objects correlates to said identified object.

16. The object detector of claim 7 wherein said correspondence processing part judges, if a group of objects which are of a plurality of objects detected by said object sensor and are detected in mutually adjacent areas is correlated to said identified image, that said group of objects correlates to said identified object.

17. The object detector of claim 8 wherein said correspondence processing part judges, if a group of objects which are of a plurality of objects detected by said object sensor and are detected in mutually adjacent areas is correlated to said identified image, that said group of objects correlates to said identified object.

18. The object detector of claim 9 wherein said correspondence processing part judges, if a group of objects which are of a plurality of objects detected by said object sensor and are detected in mutually adjacent areas is correlated to said identified image, that said group of objects correlates to said identified object.
